# EUROPEAN PATENT SPECIFICATION

(11) **EP 2 218 318 B1**
(45) Date of publication and mention of the grant of the patent: **22.08.2012**
(21) Application number: 10153328.9
(22) Date of filing: 11.02.2010
(51) Int. Cl.: A01D 17/10

(54) **Uprooting device**
Entwurzelungsvorrichtung
Dispositif de déracinement

(30) Priority: 16.02.2009 NL 2002538
(43) Date of publication of application: 18.08.2010
(73) Proprietor: Basrijs B.V., 4891 SZ Rijsbergen (NL)
(72) Inventor: Bastiaansen, Cornelis Theodorus Marie, 4891 SZ, Rijsbergen (NL)
(74) Representative: Grootscholten, Johannes A.M.

(56) References cited:
- EP-A- 1 405 554
- BE-A2- 904 183
- DE-C- 750 947
- DE-C- 805 199
- FR-A- 2 501 958
- NL-A- 9 300 109
- US-A- 667 890
- US-A- 1 577 252

## Description

The present invention relates to an uprooting device for uprooting plants and/or bushes and other crops such as saplings, shrubs, etc. In a per se known embodiment the uprooting device comprises a mobile frame and uprooting means, such as a knife, at the front of the frame for detaching the crops from a substrate. The knife is then preferably arranged on the front side in the direction of movement of the mobile frame, and the term mobile must of course not be interpreted restrictively, since such an uprooting device can also comprise a propelling drive of its own. The known device further comprises a transport track on the frame for carrying upward the detached bushes and/or plants, and a conveyor with carrier means above the transport track for co-displacing the bushes and/or plants over the transport track.

In such a known device, as for instance known from NL-93.00109, it is known that a transport track without conveyor is arranged on the frame for carrying detached crops upward. Such a transport track can for instance comprise a bar chain conveyor or sieve conveyor, or other similar device.

It is the intention here to shake loose from the uprooted crops a part of the lifted earth also carried upward over the transport track. It must then be possible for this earth or soil to drop back onto the substrate from which the crops are uprooted.

Further, an uprooting device is known from especially US-667890 which exhibits all features in the pre-characterizing portion of claim 1. As a further example of prior art, reference is made here to US-1577252, in as far as the bristles according thereto can be considered as a embodiment of "pins".

The present invention has for its object to obviate or at least alleviate at least some drawbacks of the known art, for which purpose a device according to the present invention is distinguished by the combination of measures as defined in combination in the single independent claim, including particularly the features in the characterizing part thereof. The pins and the defined interspacing thereof relative to the transport track provide for a good transport between the transport track and the conveyor of the bushes and/or plants, wherein the risk of damage is considerably reduced or even wholly obviated. Such damage can result in the known art in that the plate-like carriers wedge the plants or bushes between the carriers and the transport track, this being prevented with said spacing. In addition to co-displacing the crops, the protrusions and/or pins can also serve to loosen earth or soil from the root systems of the bushes and/or plants.

With the thus defined features of the conveyor relative to the known art a better lifting of uprooted bushes and/or plants or other crops can be effected in order to enable actual effective discharge of the crops for further processing at the top of the transport track. The conveyor is then of course situated at a limited distance relative to the transport track, and such a distance can be variable. The plants and/or bushes to be lifted therebetween are thus preferably compressed to at least some extent and, when it is combined with the transport track, the conveyor thus forms an embodiment of pressing means for the purpose of at least slightly compressing the plants and/or bushes. If the space between the transport track and the conveyor is then chosen in accordance with the type of crop and the size or dimensions thereof, an effective improvement can be realized relative to the known art which, wholly against prior expectations and therefore surprisingly, in no way results in a harmful effect or damage to the crops after they have been uprooted and lifted in a device according to the invention, so including the conveyor on or above or over the transport track.

According to the invention, especially the characterizing portion of independent claim 1, then further the transport track is provided with pins or protrusions, wherein these pins and protrusions and those of the conveyor define an intermediate space relative to the other of the transport track and the conveyor. There is no or at least less chance of these becoming jammed when the lowest part of the transport track lies close to the ground, and can be forced through the ground more easily than the plate-like carriers of the known art without risk, or with reduced risk, of the transport track becoming jammed.

The present invention has diverse preferred embodiments as defined in the dependent claims.

It is thus possible according to the invention for the conveyor to have a configuration similar to the transport track. This simplifies the construction in respect of the number of different components necessary for this purpose. In very specific embodiments with for instance a bar chain conveyor or a sieve belt this moreover results in an additional earth or soil-loosening effect, and this earth or soil can then also be discharged again via the conveyor.

A transmission bridging an initial height is preferably arranged between the uprooting means and the transport track. A part of the transport track lying closest to the ground can then be positioned with certainty some distance above the ground, whereby moving parts of the transport track are less susceptible to failures or wear which can be caused by earth.

In yet another preferred embodiment the conveyor can comprise a member co-displacing with the transport track, such as a sieve belt or a bar chain.

Using a transmission bridging an initial height between the uprooting means and the transport track it is even possible to prevent the pins, which are provided on the transport track according to the present invention, having to be forced through the ground at the lowest part of the transport track.

Pins on the transport track and on the conveyor are preferably arranged offset in the space between the transport track and the conveyor. Plants and/or bushes (and also saplings and/or shrubs) can thus be clamped with an optimal grip between the transport track and the conveyor.

In yet another preferred embodiment the conveyor can extend to a greater height than the transport track. Particularly in an embodiment with protrusions and/or pins on the transport track or on the conveyor, although not only in such a configuration, crops can be prevented from being carried over the top of the conveyor, whereby they could then drop back to the uprooting means. Owing to the extra height of the conveyor, crops clinging to the conveyor have more opportunity to release therefrom, for which purpose additional vibrations could also be used, although in many embodiments gravitational force will have sufficient effect to release the crops from the conveyor in the part thereof extending above the transport track.

In yet another preferred embodiment with the conveyor in the form of a member co-displacing with the transport track, such as a sieve belt or a bar chain, the invention can provide the further feature of synchronizing means which are arranged between the transport track and the conveyor. Such synchronizing means can act on the transport track and the conveyor, although measures can also be taken for synchronization of motors and/or other drives which provide for movement of the conveyor and the transport track. It can be possible here for the synchronizing means to comprise separate motors which are controlled in synchronized manner, for instance using control signals, or to be mutually connected by means of synchronizing coupling means. Synchronization of the transport track and the conveyor can also be realized in other configurations and constructions. The object hereof is of course to limit damage to crops as far as possible and to simultaneously loosen as much earth or soil as possible from the crops, particularly when they are bushes and/or plants.

In yet another preferred embodiment an uprooting device according to the present invention has the feature that the uprooting means comprise a knife, and teeth are arranged extending between the knife and the transport track. At the transition from the teeth to the transport track a rotation member can here be arranged with blades thereon for transferring the crops from the teeth onto the transport track. Such an addition can form a transmission bridging an initial height in order to make space on or at a lowest part of the transport track so as to allow passage there of pins or teeth, just as the pins (or teeth) on the conveyor, although in an embodiment without bridging of an initial height this is also a particularly favourable embodiment to enable a smooth continuous movement of the crops over the knife and the teeth via the rotation member to the transport track. A further functionality can also be provided here in that the blades extend between the teeth. An improvement in the operation of the rotation member can thus be brought about during transfer of the crops to the transport track. It is also possible, in such a configuration with a rotation member, for the rotation member to comprise vibrating elements, such as cams, acting on at least several of the teeth. Such cams can cause the teeth to vibrate, and can thus be deemed as vibrating elements. The teeth then transmit this vibration to the uprooted crops, wherein the operation of loosening earth or soil can already be improved in the path between the knife and the transport track, after which the transport track can have a still further improved effect on loosening of earth and soil, for which purpose individual vibrating means can also be arranged to act on the transport track. An embodiment of the present invention will be described hereinbelow with reference to the accompanying drawing, which shows an embodiment of the present invention in non-limitative manner and only by way of example, and in which:
Figure 1 shows a side view of the uprooting device according to the present invention; and
Figure 2 shows a view along line II-II in fig. 1, but without the added conveyor.

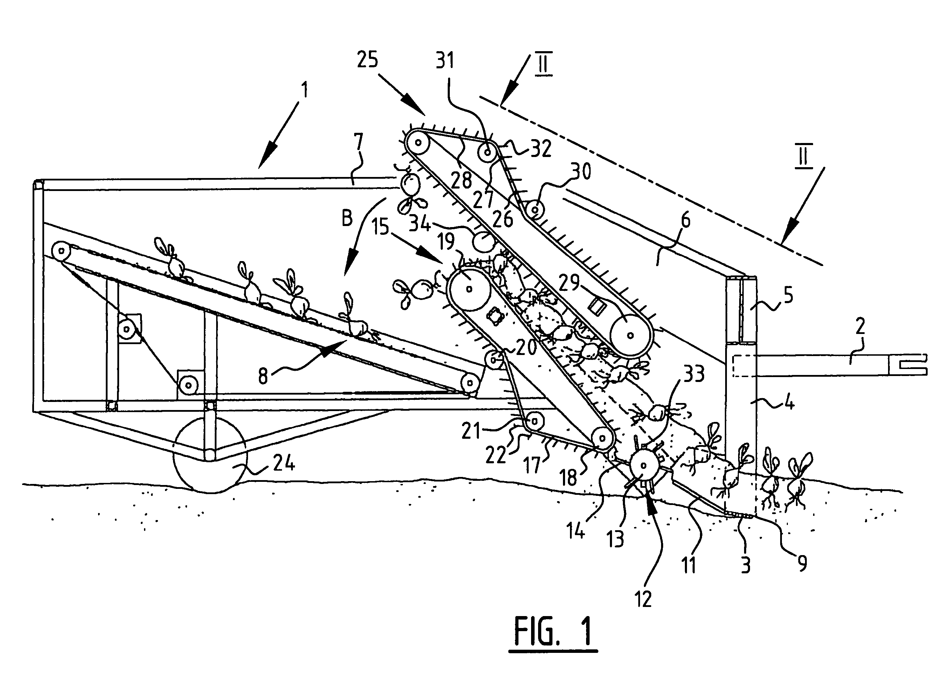

In the side view shown in fig. 1 the frame of the uprooting device is designated as a whole with reference numeral 1. This frame comprises a towing bracket 2 which can be coupled at its front outer end to the towing hook of a tractor. Alternatively, it is of course possible for uprooting device 1 as shown here to comprise its own propelling means and/or a drive for this purpose.

In the embodiment shown here frame 1 comprises wheels 24 at the opposite outer end. Although the frame shown in fig. 1 is designed and intended to be pulled by a tractor, use can also be made of another vehicle. In an embodiment in which uprooting device 1 is itself provided with a drive for propelling thereof, towing member 2 can be omitted and wheels will also be mounted on the front side of frame 1. Frame 1 in this case also comprises a power source for propelling the uprooting device.

Frame 1 has in known manner on its front side a horizontal knife 3 which extends below ground level, at least during operation thereof. Vertical knives here connect to the horizontal outer ends of knife 3. Vertical knives 4 are fixed on the top side to a transverse beam 5 of the frame, which is connected by means of a support construction 6 to the remaining framework 7 of frame 1. In a preferred embodiment an assembly of knife 3 and knives 4 is pivotable relative to the framework. A pivot point can be realized in many ways. The purpose here is that at least knife 3 can make a reciprocal stabbing movement in order to enhance the raising of the layer of earth with the uprooted crops (bushes or plants) therein. An example of a positioning of such a pivot can be: between the transverse beam and vertical knives 4. Other positions and all possible embodiments of such a pivot also form part of the invention and fall within the definitions thereof given below.

This framework 7 supports in known manner a conveyor, designated as a whole with reference numeral 8, by means of which uprooted crops, particularly bushes and plants, can be discharged. There may also be a collecting bin (not shown) instead of conveyor 8.

As shown in figure 1, knife 3 is curved from the cutting edge 9 thereof such that a rear edge 10 of knife 3 points obliquely upward. Welded to rear edge 10 are teeth 11 which likewise point obliquely upward and are otherwise cantilevered. Teeth 11 thus have a free outer end.

As the uprooting device advances, the knife 3, at a suitable depth adjustment thereof, cuts loose a strip of ground in which the crop has grown. The crops, particularly plants and bushes, are carried together with the strip cut by knife 3 via teeth 11 to the rotation member, designated as a whole with reference numeral 12. This rotation member 12 rotates in counter-clockwise direction during operation. This is at least the case in the view of fig. 1. Rotation member 12 comprises a roller 13 with blades or plates 14 protruding relative to roller 13 and inclining slightly rearward in the rotation direction. The blades or plates can have a curvature (not shown). This is preferably a curvature which is formed in rearward direction relative to the rotation direction of roller 13 (counter-clockwise in figure 1), i.e. in the same orientation as the position of the blades or plates 14 shown in figure 1.

When the cut soil or strip with the crop therein is moved over teeth 11 in the direction of conveyor 8, the crops with the soil or earth thereon are engaged on the underside by blades or plates 14, whereby a transporting action is exerted on the strip of soil toward a sieve conveyor designated as a whole with reference numeral 15. The sieve conveyor can however also be a bar chain conveyor. In addition to a transporting action, rotation member 12 also has a loosening action. By acting on the underside of the cut strip of soil with the crops therein the blades 14 exert a force on root systems and earth or soil, whereby the cohesion of the strip of earth or soil can be reduced. Soil adhering to the crops can thus be dislodged in simple manner by sieve conveyor 15, whereby substantially only crops with no soil or earth adhering thereto arrive at the outer end of sieve conveyor 15 opposite teeth 11, this conveyor being an embodiment of a transport track according to the present invention.

Sieve conveyor 15 comprises a succession of transverse rods 16 which are mutually connected via pivotable or flexible belts. Belts 17 are guided over rollers 18, 19 and rollers 20, 21.

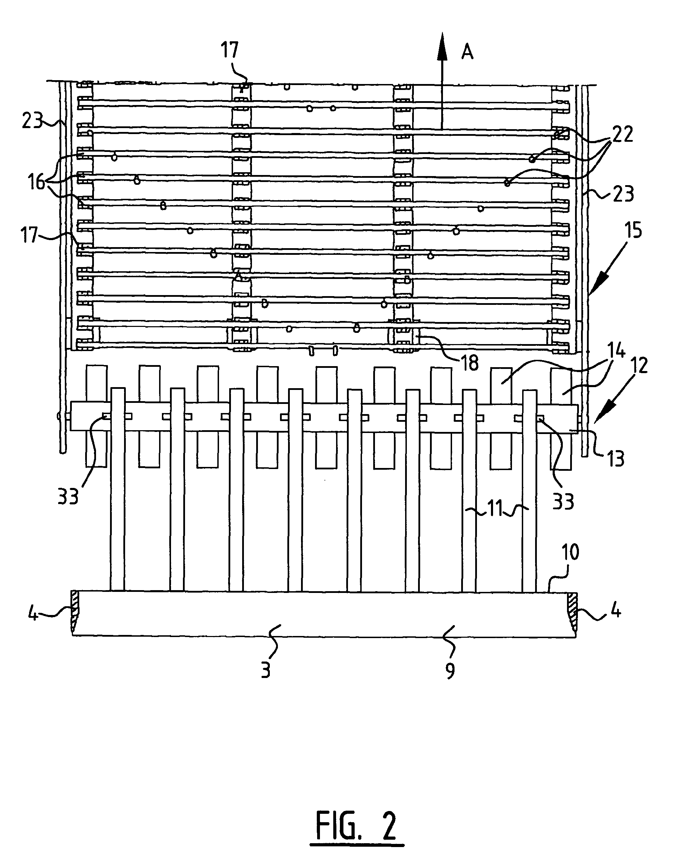

Pins 22 are arranged on transverse rods 16 in a V-shaped pattern as shown in fig. 2.

In operation the sieve conveyor 15 will cause rods 16 with pins 22 thereon to move in the direction of arrow A via a suitably chosen driving thereof. Owing partially to the V-shaped arrangement the pins 22 exert a co-displacing, transporting effect on the crops, while loosened earth or soil can drop between rods 16 of sieve conveyor 15 onto the ground in the direction of movement, to the right in fig. 1, behind knife 3. Operation of knife 3 is thus not impeded by soil poured onto the crops in front of knife 3. In order to optimize still further the earth or soil-loosening action, vibration means can be provided in an embodiment (not shown) in combination with at least sieve conveyor 15. Such vibration means can take a relatively simple form, for instance as beating attachments.

A bar chain 25 as embodiment of the conveyor in the sense of the present invention is further arranged on or preferably above the transport track or sieve conveyor 15. Beating attachments or other vibration means can also be provided in combination with the bar chain.

The strip of earth with the crops therein, coming from knife 3 via rotation member 12, is thus enclosed between sieve conveyor 15 and the conveyor 25 situated thereabove. Conveyor 25 preferably compresses the enclosed plants, bushes, saplings, trees or shrubs to some extent against or onto transport track 15 in order to bring about a good lifting of the plants, and forms as such, in the combination with the transport track, an embodiment of pressing means.

Conveyor 25 likewise forms a bar chain 27 with bars 26 and pins 32 on bars 26. In a possible embodiment fewer pins 32 can suffice for bar chain 25 than the number of pins 22 of sieve conveyor 15. The conveyor or bar chain 25 further comprises a number of wheels 28, 29 and 30, 31 for guiding conveyor 25. Wheels 30, 31 moreover also serve to keep the conveyor tensioned. In order to prevent sagging of the bottom part of the bar chain 27 trained in an endless loop, at least one set of support wheels 34 can be arranged thereunder between reversing rollers 29.

It is noted that the view of fig. 2 in the direction of arrow II-II in fig. 1 is a view in which conveyor 25 is omitted. It is additionally noted that conveyor 25 can have per se a design all but identical to that of sieve conveyor 15.

Pins 32 of conveyor 25 and those of transport track 15 are preferably in offset arrangement, which can be represented as follows: 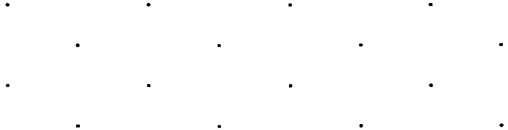 wherein the symbols represent pins 22 and the symbols represent pins 32.

Also noted here is the positioning of conveyor 25, which is such that bar chain 27 with bars 26 extends to a greater height above sieve conveyor 15 than the end of sieve conveyor 15 in upward direction. Crops which unintentionally remain attached to conveyor 25 are thus given the opportunity to detach from pins 32 and bars 26 of conveyor 25 in the direction of arrow P, whereby the crops can be prevented from being carried over the top of conveyor 25 and back downward in the direction of knife 3. This is a common occurrence when conveyor 25 extends to a lower height than, or the same height as sieve conveyor 15.

As shown in fig. 2, teeth 11 thus extend from knife 3 in the direction of rotation member 12. The blades or plates 14 on roller 13 are interrupted and teeth 11 are arranged between the blades or plates 14. Teeth 11 rest on or against roller 13, on which cams 33 forming vibrating elements are arranged.

As rollers 12 rotate, teeth 11 drag over the outer surface of roller 13 and cams 33 will bring about a vibrating function of teeth 11 when cams 33 pass under teeth 11.

Cams 33 do not have to have large dimensions and cams 33 can be distributed over the outer surface of roller 13 in patterns other than that shown. When one of the cams 33 passes under one of the teeth 11, such a tooth 11 will strike against the outer surface of roller 13 after cam 33 has rotated away, thereby bringing about the vibrating function of the vibrating elements formed by cams 33. In an embodiment with a pivot for allowing reciprocal cutting with knife 3 and knives 4 the cams 33 could even co-act with teeth 11 such as to form a drive for such a reciprocal movement. During each circulating movement the cams could then come up against teeth 11 in order to force knife 3 upward. The teeth must then however be oriented in relation to the underside of roller 13 when it is driven to rotate in counter-clockwise direction in the view of figure 1.

After examination of the foregoing disclosure of the invention many additional and/or alternative options will occur to the skilled person.

It is thus possible that the pins or teeth are not rod-like and do not have a round, oval, square or rectangular cross-section, but are for instance plate-like over a short distance. In front view the pins or teeth can also be cross or star-shaped and so on. The pins are described as preferably being positioned in offset manner. It is however also possible within the scope of the invention to have pins 22 and 32 placed directly opposite each other, although a space is then preferably still provided between the outer ends of pins 22, 32 in order to prevent branches or roots of the plants and/or bushes as it were being crushed between the pins.

## Claims

1. Uprooting device for uprooting bushes and/or plants, comprising:
- a mobile frame (1);
- uprooting means, such as a knife (3), at the front of the frame for detaching the bushes and/or plants from a substrate;
- a transport track comprising a transport conveyor (15) on the frame for carrying upward the detached bushes and/or plants; and
- a conveyor (25) with carrier means above the transport conveyor(15) for co-displacing the bushes and/or plants over the transport conveyor(15) ,
wherein the carrier means comprise pins arranged at a distance from each other on the conveyor (25), and wherein the pins (32) extend from the conveyor toward the transport conveyor(15) up to a distance from the transport conveyor(15) for the purpose of holding the bushes and/or plants against the transport conveyor(15) over at least a part thereof in an upward movement over the transport conveyor(15),
**CHARACTERIZED IN THAT**
the transport conveyor(15) comprises at least one of protrusions and pins (22), and these pins or protrusions and the pins of the conveyor (25) define an intermediate space relative to the other of the transport conveyor(15) and the conveyor (25) with the carrier means.

2. Uprooting device as claimed in claim 1, wherein the conveyor (25) has a configuration similar to the transport conveyor(15)

3. Uprooting device as claimed in claim 1 or 2, wherein the conveyor (25) comprises at least one of a sieve conveyor and a bar chain.

4. Uprooting device as claimed in claim 1, 2 or 3, wherein a transmission (3, 11, 12, 13, 14) bridging an initial height is arranged between the uprooting means (3) and the transport conveyor(15)

5. Uprooting device as claimed in at least one of the preceding claims, wherein the pins or other protrusions (22) of the transport conveyor(15) and the pins of the conveyor (25) are in offset arrangement.

6. Uprooting device as claimed in at least one of the foregoing claims, wherein the conveyor (25) extends to a greater height than the transport conveyor(15).

7. Uprooting device as claimed in at least one of the foregoing claims, wherein the conveyor (25) comprises a member co-displacing with the transport conveyor(15), such as a sieve belt or a bar chain.

8. Uprooting device as claimed in claim 7, wherein synchronizing means are arranged between the transport conveyor(15) and the conveyor (25).

9. Uprooting device as claimed in claim 8, wherein the synchronizing means comprise separate motors which are driven in synchronized manner, for instance using control signals, or are mutually connected by means of synchronizing coupling means.

10. Uprooting device as claimed in at least one of the foregoing claims, wherein the uprooting means comprise a knife (3), and teeth (11) are arranged extending between the knife and the transport conveyor(15), and with a rotation member (13) with blades thereon at the transition from the teeth to the transport conveyor(15) for the purpose of transferring the crops from the teeth onto the transport conveyor(15).

11. Uprooting device as claimed in claim 10, wherein the blades (14) extend between the teeth (11).

12. Uprooting device as claimed in claim 10 or 11, wherein the rotation member comprises vibrating elements, such as cams (33), acting on at least several of the teeth (11).

## Patentansprüche

1. Entwurzelungsvorrichtung zum Entwurzeln von Büschen und/oder Pflanzen mit:
- einem mobilen Gestell (1),
- einer Entwurzelungseinrichtung wie ein Messer (3) an der Vorderseite des Gestells zum Abtrennen der Büsche und/oder Pflanzen von einem Substrat,
- einem Transportweg mit einem Transportförderer (15) auf dem Gestell zum Aufwärtstragen der gelösten Büsche und/oder Pflanzen und
- einem Förderer (25) mit einer Trägereinrichtung oberhalb des Transportförderers zum gemeinsamen Transportieren der Büsche und/oder Pflanzen über den Transportförderer (15),
wobei die Trägereinrichtung Stifte (32) aufweist, die mit Abstand zueinander auf dem Förderer (25) angeordnet sind, und wobei die Stifte (32) sich von dem Förderer in Richtung auf den Transportförderer über einen Abstand von dem Transportförderer erstrecken zum Halten der Büsche und/oder Pflanzen gegen den Transportförderer (15) über zumindest einen Teil von ihm in einer Aufwärtsbewegung über den Transportförderer (15), ***dadurch gekennzeichnet,* dass** der Transportförderer (15) zumindest eins von Vorsprüngen und Stiften (32) aufweist und diese Stifte oder Vorsprünge und die Stifte des Förderers (25) einen Zwischenraum relativ zu dem anderen des Transportförderers (15) und des Förderers (25) mit der Trägereinrichtung bilden.

2. Entwurzelungsvorrichtung nach Anspruch 1, wobei der Förderer (25) einen dem Transportförderer (15) ähnlichen Aufbau aufweist.

3. Entwurzelungsvorrichtung nach Anspruch 1 oder 2, wobei der Förderer (25) zumindest eins, einen Siebförderer und eine Stangenkette, aufweist.

4. Entwurzelungsvorrichtung nach Anspruch 1, 2 oder 3, wobei eine Transmission (3, 11, 12, 13, 14), die eine Anfangshöhe überbrückt, zwischen der Entwurzelungseinrichtung (3) und dem Transportförderer (15) angeordnet ist.

5. Entwurzelungsvorrichtung nach zumindest einem der vorstehenden Ansprüche, wobei die Stifte oder andere Vorsprünge (22) des Transportförderers (15) und die Stifte des Förderers (25) in einer versetzten Anordnung sind.

6. Entwurzelungsvorrichtung nach einem der vorstehenden Ansprüche, wobei der Förderer (25) sich zu einer größeren Höhe als der Transportförderer (15) erstreckt.

7. Entwurzelungsvorrichtung nach zumindest einem der vorstehenden Ansprüche, wobei der Förderer (25) ein Element wie einen Siebgurt oder eine Stangenkette aufweist, das zusammen mit dem Transportförderer (15) verlagert.

8. Entwurzelungsvorrichtung nach Anspruch 7, wobei eine Synchronisierungseinrichtung zwischen dem Transportförderer (15) und dem Förderer (25) angeordnet ist.

9. Entwurzelungsvorrichtung nach Anspruch 8, wobei die Synchronisierungseinrichtung separate Motoren aufweist, die in synchronisierter Weise, beispielsweise unter Verwendung von Steuersignalen, betrieben werden oder die gegenseitig mittels einer Synchronisierungseinrichtung verbunden sind.

10. Entwurzelungsvorrichtung nach zumindest einem der vorstehenden Ansprüche, wobei die Entwurzelungseinrichtung ein Messer (3) aufweist und wobei Zähne (11) sich zwischen dem Messer und dem Transportförderer (15) angeordnet sind und mit einem Drehelement (13) mit Klingen darauf am Übergang von den Zähnen zum Transportförderer (15) zum Zweck der Übertragung der Pflanzen von den Zähnen auf den Transportförderer (15).

11. Entwurzelungsvorrichtung nach Anspruch 10, wobei die Klingen (14) sich zwischen den Zähnen (11) erstrecken.

12. Entwurzelungsvorrichtung nach Anspruch 10 oder 11, wobei das Drehelement Vibrationselemente wie Nocken (33) aufweist, die auf zumindest einige der Zähne (11) wirken.

## Revendications

1. Dispositif de déracinage pour déraciner des buissons et/ou des plantes, comprenant :
- un châssis mobile (1) ;
- des moyens de déracinage, tels qu'un couteau (3), à l'avant du châssis pour détacher les buissons et/ou les plantes d'un substrat ;
- un rail de transport comprenant un convoyeur de transport (15) sur le châssis pour transporter vers le haut les buissons et/ou les plantes détachés ; et
- un convoyeur (25) avec des moyens de transport au-dessus du convoyeur de transport (15) pour déplacer conjointement les buissons et/ou les plantes par dessus le convoyeur de transport (15),
dans lequel les moyens de transport comprennent des broches (32) agencées à distance les unes des autres sur le convoyeur (25), et dans lequel les broches (32) s'étendent du convoyeur vers le convoyeur de transport (15) jusqu'à une distance du convoyeur de transport (15) dans le but de maintenir les buissons et/ou les plantes contre le convoyeur de transport (15) sur au moins une partie de celui-ci dans un mouvement vers le haut par dessus le convoyeur de transport (15),
**caractérisé en ce que**
le convoyeur de transport (15) comprend au moins l'une parmi des protubérances et des broches (22), et ces broches ou protubérances et les broches du convoyeur (25) définissent un espace intermédiaire par rapport à l'autre parmi le convoyeur de transport (15) et le convoyeur (25) avec les moyens de transport.

2. Dispositif de déracinage selon la revendication 1, dans lequel le convoyeur (25) a une configuration similaire à celle du convoyeur de transport (15).

3. Dispositif de déracinage selon la revendication 1 ou 2, dans lequel le convoyeur (25) comprend au moins l'un parmi un convoyeur à tamis et une chaîne à barres.

4. Dispositif de déracinage selon la revendication 1, 2 ou 3, dans lequel une transmission (3, 11, 12, 13, 14) cheminant par une hauteur initiale est agencée entre les moyens de déracinage (3) et le convoyeur de transport (15).

5. Dispositif de déracinage selon au moins l'une des revendications précédentes, dans lequel les broches ou autres protubérances (22) du convoyeur de transport (15) et les broches du convoyeur (25) sont agencées de manière décalée.

6. Dispositif de déracinage selon au moins l'une des revendications précédentes, dans lequel le convoyeur (25) s'étend à une plus grande hauteur que le convoyeur de transport (15).

7. Dispositif de déracinage selon au moins l'une des revendications précédentes, dans lequel le convoyeur (25) comprend un élément se déplaçant conjointement avec le convoyeur de transport (15), tel qu'une courroie à tamis ou une chaîne à barres.

8. Dispositif de déracinage selon la revendication 7, dans lequel des moyens de synchronisation sont agencés entre le convoyeur de transport (15) et le convoyeur (25).

9. Dispositif de déracinage selon la revendication 8, dans lequel les moyens de synchronisation comprennent des moteurs séparés qui sont entraînés de manière synchronisée, par exemple en utilisant des signaux de commande, ou qui sont mutuellement reliés par des moyens de moyens de couplage de synchronisation.

10. Dispositif de déracinage selon au moins l'une des revendications précédentes, dans lequel les moyens de déracinage comprennent un couteau (3), et des dents (11) sont agencées s'étendant entre le couteau et le convoyeur de transport (15), et avec un élément de rotation (13) comportant des lames sur celui-ci au niveau de la transition entre les dents et le convoyeur de transport (15) dans le but de transférer les produits récoltés des dents jusque sur le convoyeur de transport (15).

11. Dispositif de déracinage selon la revendication 10, dans lequel les lames (14) s'étendent entre les dents (11).

12. Dispositif de déracinage selon la revendication 10 ou 11, dans lequel l'élément de rotation comprend des éléments vibrants, tels que des cames (33), agissant sur au moins plusieurs des dents (11).
